# EUROPÄISCHE PATENTANMELDUNG

(11) **EP 1 872 699 A1**
(43) Veröffentlichungstag der Anmeldung: **02.01.2008**
(21) Anmeldenummer: 06013317.0
(22) Anmeldetag: 28.06.2006
(51) Int. Cl.: A47K 3/02, A47K 3/00, A47K 3/16, A01K 63/00

(54) **Sanitärgegenstände mit oder ohne Sichtverkleidungen**

(71) Anmelder: Bischof, Georg, 37308 Reinholterode (DE)
(72) Erfinder: Bischof, Georg, 37308 Reinholterode (DE)
(74) Vertreter: Seckel, Uwe

(57) **Zusammenfassung**

Die Erfindung bezieht sich auf Sanitärgegenstände mit oder ohne Sichtverkleidungen, insbesondere Badewannen, Duschwannen, Whirpools, Waschtische und Wannenträger, bei denen der Sanitärgegenstand selbst oder die Sichtverkleidungen (1) aus mindestens teilweise geschlossenen und beabstandeten Wänden (5,6,7,7a) bestehen, wobei mindestens die Wände (5;6;7;7a), welche die Sichtflächen bilden, transparent sind und wobei der von den Wänden (5,6,7,7a) umgrenzte Zwischenraum (2) mit gestalterischen Effekten und/oder Animationen ausgestaltet ist. Diese gestalterischen Effekte in den Zwischenräumen (2) sind ein- bis dreidimensionale graphische Darstellungen und/oder mineralische oder künstlich hergestellte Elemente, wie Korallen, Amphibolen u. ä. und/oder lebende niedrige Wirbeltiere oder Aquariumfische sowie Pflanzen, die in den als terrarienähnlich oder zimmeraquarienähnlich ausgerüsteten Zwischenräumen eingesetzt sind.

## Beschreibung

Die Erfindung betrifft Sanitärgegenstände mit oder ohne Sichtverkleidungen, insbesondere Badewannen, Duschwannen, Whirpools, Waschtische und Wannenträger.

Sanitärgegenstände mit und ohne Sichtverkleidungen, wie beispielsweise Badewannen, Duschwannen, Whirpools oder ähnliche sanitäre Einrichtungen in den verschiedensten Ausführungsformen sind allgemein bekannt und auf dem Markt verfügbar.

Aus der DE 1 867 157 und der DE 1 889173 sind beispielsweise doppelwandige Badewannen bekannt, die aus zwei Wannenkörpern unterschiedlicher Größe aber gleicher Grundform bestehen, die beim Ineinanderfügen einen geschlossenen Zwischenraum zwischen den Wänden und dem Boden ausbilden, der mit einem Zu- und Ablauf versehen ist und der zum Zweck der Erwärmung der Badewanne mit Warmwasser befüllbar ist oder in dem ein elektrisches Heizelement integriert ist, mit dem eingefülltes Wasser erwärmt wird, wie weiter in der DE 1 8 67 157 vorgeschlagen wird. Beide Lösungsvarianten setzen aber voraus, dass mindestens der innenliegende Wannenkörper aus einem wärmeleitfähigen Material besteht. Eine weitergehende Nutzung des Zwischenraums ist nicht vorgesehen.

Aus der DE 26 50 358 C2 ist ein Sanitärartikel, wie beispielsweise ein WC-Becken oder Bidet bekannt, bei dem zwischen dem Grundkörper und dem Überzug ein Zwischenraum vorgesehen ist, der mit einer Kunststoff-Ausschäumung aufgefüllt ist, um auf diese Weise bei gleicher Dicke des Überzugs auch ohne glättende Maßnahmen eine glatte Sichtoberfläche zu erreichen.

Aus der DE 1 960 469 U ist eine Badewanne mit einem mit Seitenteilen verkleideten Wannenkörper bekannt, bei der ein Wannenkörper und eine die Seitenteile bildende Verkleidung einstückig aus Stahlblech besteht und durchgehend mit einer Schutzschicht versehen ist, um auf diese Weise die Sichtflächen einer Badewanne optisch zu verbessern und gegenüber gekachelten Einbaubadewannen pflegeleichter zu gestalten.

Aus der AT 409 817 B ist ein Wannenträger für Bade- und Duschwannen bekannt, bei dem das Bodenelement eine Anordnung von Verstrebungen umfasst, so dass neben und/oder zwischen den Verstrebungen Durchgangsöffnungen gebildet sind, die das Einfüllen von Schüttgut zu Luftschall- oder Wärmedämmzwecken gestatten. Dieser Wannenträger verfügt über eine umlaufende Wannenschürze, deren Sichtfläche, wie allgemein bekannt, farblich aber auch mit Kacheln gestaltet sein kann, um den optischen Eindruck zu verbessern.

Aus der EP 1 202 170 A3 ist eine Befestigungsart einer an sich üblichen Verkleidung bei Wannenträgern für Dusch- und Badewannen bekannt, die aus einer ein- oder mehrteiligen Schürze bestehen kann, die zumindest bereichsweise als Sichtverblendung über Distanzelemente an der Außenseite anbringbar ist, um auf diese Weise den äußeren Gesamtausdruck einer eingebauten Dusch- oder Badewanne optischer zu gestalten.

In der EP 1 038 484 B1 und der EP 1281 341 werden für ein verbessertes Erscheinungsbild einer Badewanne Maßnahmen vorgeschlagen, um den Innenraum der Badewanne indirekt oder direkt zu beleuchten. Zu diesem Zweck ist/sind in der Wandung der Badewanne eine oder mehrere Lichtquellen integriert oder montiert, die in Hülsen befestigt sind, die über eine Schraubverbindung auf der Innenseite der Badewanne festgelegt und mit einer Glasscheibe gegenüber dem Badewasser wasserdicht abgedichtet werden.

Aus der DE 101 55 156 A1 sind Sanitärartikel, wie Badewannen, Waschbecken und dgl. bekannt, die aus einer flüssigen Glasmasse im Schleuderguss- bzw. Druckgussverfahren mit oder ohne Hohlräume hergestellt werden, wobei die Hohlräume mit einem Material gefüllt sind. Dieses Material kann Schlieren oder andere Gestaltungselemente aufweisen. Diese Sanitärartikel können nur als volltransparente Sanitärartikel hergestellt werden und bedürfen nach der Herstellung einer weiteren Bearbeitung, wie z.B. Verschleifen von Kanten und Graten, ein mögliches Ätzen der Sandstrahlen, um Teile untransparent zu machen aber ein nachfolgendes Tempern ist notwendig, um die Sanitärartikel bruchsicher und splitterfrei zu machen.

Folglich ist die Herstellung sehr aufwendig. Aber auch die Hohlräume können bedingt durch die vorgeschlagenen Herstellungsverfahren nur in begrenzten Querschnitten ausgebildet werden. Folglich sind die eingelegten Gestaltungsmaßnahmen sehr gering.

Mit keiner der eingangs genannten Ausführungsformen von Sanitärgegenständen kann der allgemeine Trend, Sanitärräume, wie beispielsweise Waschräume, Badezimmer, Wellnessbereiche, insbesondere im gewerblich genutzten Bereichen aber auch in Hotels und in der Privatsphäre immer mehr zu einem Ort der Behaglichkeit und der Entspannung zu machen, erfüllt werden. Die gegenwärtigen bekannten Lösungsvarianten sind auch nicht geeignet diese Bereiche an ein bestimmtes und bevorzugtes Ambiente individuell anzupassen und, wenn gewünscht, nach einer bestimmten Dauer der Gewohnheit das Erscheinungsbild dieser Bereiche kostengünstig zu verändern.

Aufgabe der vorliegenden Erfindung ist daher Sanitärgegenständen selbst und/oder deren Sichtverkleidungen, nämlich Schürzen, der eingangs genannten Art zur Verfügung zu stellen, die individuell an eine gewünschte aber auch an eine anspruchsvolle Gestaltungsform eines Sanitärbereichs oder Wellnessbereichs anpassbar sind und welche die Voraussetzung schaffen, dass bei Bedarf das äußere Erscheinungsbild des Sanitärgegenstands jederzeit kostengünstig veränderbar ist.

Diese Aufgabe wird erfindungsgemäß dadurch gelöst, dass die Sanitärgegenstände und/oder Sichtverkleidungen aus mindestens teilweise geschlossenen und beabstandeten Wänden bestehen, wobei mindestens die Wände, welche die Sichtflächen bilden, transparent sind und dass der von den Wänden umgrenzte Zwischenraum mit gestalterischen Effekten und/oder Animationen ausgestaltet ist.

Der Grundgedanke der Erfindung liegt darin, Sanitärgegenstände und/oder deren Sichtverblendungen mit einen optischen Erscheinungsbild zu versehen, das individuell an den Flair der Ausstattung eines Wellnessbereichs, eines Sanitärbereichs, u. dgl. angepasst werden kann oder in diesen Bereichen beim Benutzer, durch eine eindruckvolle Gestaltung der sichtbaren Flächen eines Sanitärgegenstands oder einer kompletten Sanitäreinrichtung, ein beruhigendes Wohlgefühl auszulösen, bei dem der Benutzer in eine Gefühlswelt versetzt wird, bei der er sich vollständig entspannen kann.

Durch die teilweise geschlossenen und beabstandeten Wände sowohl beim Sanitärgegenstand selbst aber auch bei Wannenträger und insbesondere bei Sichtverkleidungen können großräumige Zwischenräume ausgebildet werden, die mit den unterschiedlichsten Effekten und gestalterischen Motiven ausgestaltet und sogar verändert werden können, wenn eine der verbundenen Wände lösbar verbunden ist. Folglich besteht jeder Zeit die Möglichkeit das sichtbare Erscheinungsbild der Sanitärgegenstände einem veränderten Gesamtambiente der entsprechenden Bereiche anzupassen. Aber auch die Pflege dieser sanitären Einrichtungsgegenstände wird durch die transparent ausgebildeten Sichtflächen, wesentlich begünstigt, da bekanntlich transparente Materialien Glas oder lichtdurchlässiger Kunststoff ist, die über Oberflächen verfügen, die dauerhaft hygienisch, problemlos zu reinigen und weitestgehend kratzfest sind.

Die in die Zwischenräume eingebrachten gestalterischen Effekte bestehen bevorzugt aus dreidimensionalen Elementen, die vorteilhafterweise aus mineralischen und/oder künstlichen hergestellten Materialien und/oder Amphibolen und/oder Korallen bestehen.

Die gestalterischen Elemente können aber auch ein-, zwei- oder dreidimensionale graphische Darstellungen sein.

Der Zwischenraum kann aber auch terrariumähnlich mit lebenden und/oder präparierten und/oder künstlich hergestellten niedrigen Wirbeltieren und/oder Schnecken gestaltet sein.

Aber auch Animationen, die aus Logo's und/oder Namen und/oder Schriftzügen in ein-, zwei- und dreidimensionaler Darstellung sein können, können alleine oder im Verbund mit gestalterischen Effekten, die beispielsweise auf eine bestimmte Umgebung oder Sehenswürdigkeit abgestimmt sind, im Zwischenraum eingebracht werden, was speziell im gewerblichen Bereich aber auch für die Touristenbranche sehr werbewirksam sein kann. Vielmehr, durch die Möglichkeit der Veränderung der Gestaltung des Zwischenraums kann ein regelmäßiger Austausch erfolgen, so dass die Gestaltung der Sichtverkleidung beispielsweise von Hotels zusätzlich kommerziell als Werbefläche vermarktet werden kann.

Nach einer bevorzugten Ausführungsform der Erfindung ist der Zwischenraum bodenseitig und stirnseitig und wasserdicht ausgeführt und mit farbiger Flüssigkeit oder Gel befüllt.

Vorteilhaft ist auch, wenn als Flüssigkeit klares Wasser genutzt wird und der Zwischenraum in Form eines Zimmeraquariums ohne oder mit lebenden Aquarienfischen und/oder Wasserpflanzen gestaltet ist.

Bevorzugt ist in diesem Fall der Zwischenraum ein wasserdicht geschlossener Zwischenraum mit mindestens einer lösbaren Wand und im Zwischenraum ist eine Sauerstoffversorgung vorgesehen, deren Versorgungsleitung eine der Wände flüssigkeitsdicht durchdringt.

Mit diesen Gestaltungsmöglichkeiten können sowohl mit jeder selbst oder durch verschiedene Kombination die transparenten Sichtflächen von Sanitärgegenständen sowohl innen als auch außen einem entsprechend bevorzugten Ambiente, wie beispielsweise als Unterwasserlandschaft oder Küstengebiet, einem besonderen ländlichen oder städtischen Gebiet und dgl. angepasst werden.

Die Zwischenräume der Sanitärgegenstände selbst werden vorteilhafterweise durch doppelwandig verlaufende Körper gebildet, wobei der innenseitige und der außenseitige oder nur der innenseitige oder außenseitige Teil mindestens teilweise aus einem transparenten Material besteht. Dabei wird empfohlen, dass die beiden Grundformen der ineinander gefügten Teile, die den Sanitärgegenstand bilden, so ausgebildet werden, dass ein großräumiger Zwischenraum zwischen den beiden Teilen sich ausbildet, deren Querschnitte zu den gegenüberliegenden Teilen und dem Boden gleich oder verschieden sein kann.

Nach einer weiteren Ausführungsform der Erfindung kann der Zwischenraum mit mindestens einer transparenten Sichtfläche in einem Abschnitt einer schürzenartigen ausgebildeten Verkleidung des Sanitärgegenstandes vorgesehen sein. In diesem Fall wird die schürzenartige Verkleidung als Rahmenkonstuktion ausgebildet.

Der Zwischenraum mit der transparenten Sichtfläche kann auch in einem Trägerelement ausgebildet sein, das als Unterbau des Sanitärgegenstandes dient. In diesem Fall ist das Trägerelement bevorzugt mittels einer Hohlprägetechnik hergestellt.

Vorteilhafterweise ist der Zwischenraum mit mindestens einer transparenten Sichtfläche gleich der Zwischenraum, der von einer versteiften Rahmenkonstruktion mit oder ohne geschlossenen Boden umschlossen wird und die gleichzeitig als Unterbau für den Sanitärgegenstand dient. Auf diese Weise kann der Zwischenraum maximal zwischen dem Sanitärgegenstand und den beabstandeten Wänden ausgelegt werden.
Diese Variante ist besonders bevorzugt zu wählen, wenn der Sanitärgegenstand selbst aus einem transparenten Material besteht und die Gestaltung des Zwischenraums terrarienähnlich oder in Form eines Zimmeraquariums gestaltet werden soll.

Der Zwischenraum zwischen den beabstandeten Wänden, von denen mindestens eine der Sichtflächen teilweise transparent ist, wird bei einer teilweisen oder umlaufenden Sichtverkleidung durch eine Rahmenkonstruktion gebildet, die aus Kunststoff oder Schaumstoff oder Metall oder Holz oder einem Verbund davon hergestellt wird, wobei die Materialien untereinander mit oder ohne Distanzelemente durch Verkleben oder Verschrauben oder Verschweißen verbunden sind. Damit kann der Querschnitt des Zwischenraums an die Form des Sanitärgegenstandes und an die vorgesehene Gestaltungsmaßnahmen gut angepasst werden.

Vorteilhafterweise ist im Zwischenraum auch eine direkte oder indirekte Beleuchtung integriert. Auf diese Weise können die im Zwischenraum vorgesehenen gestalterischen Effekte eindrucksvoll lichttechnisch untersetzt werden.

Weitere Einzelheiten der Erfindung ergeben sich aus der nachfolgenden ausführlichen Beschreibung und der beigefügten Zeichnungen, in denen einige mögliche Ausführungsvarianten an Hand von Sichtverkleidungen an Badwannen als Sanitärgegenstand gezeigt werden.

In den Zeichnungen zeigen:
- Fig. 1:: eine rein schematische Darstellung einer Vorderansicht eines Trägerelements mit einer Sichtverkleidung,
- Fig. 2:: eine mögliche schematische Darstellung einer Sichtverkleidung,
- Fig. 3:: eine weitere mögliche schematische Darstellung einer Sichtverkleidung,
- Fig. 4.: eine eckige Badewanne mit einer möglichen Ausführungsform der Sichtverkleidung,
- Fig. 5:: eine runde Badewanne mit einer möglichen Ausführungsform der Sichtverkleidung.

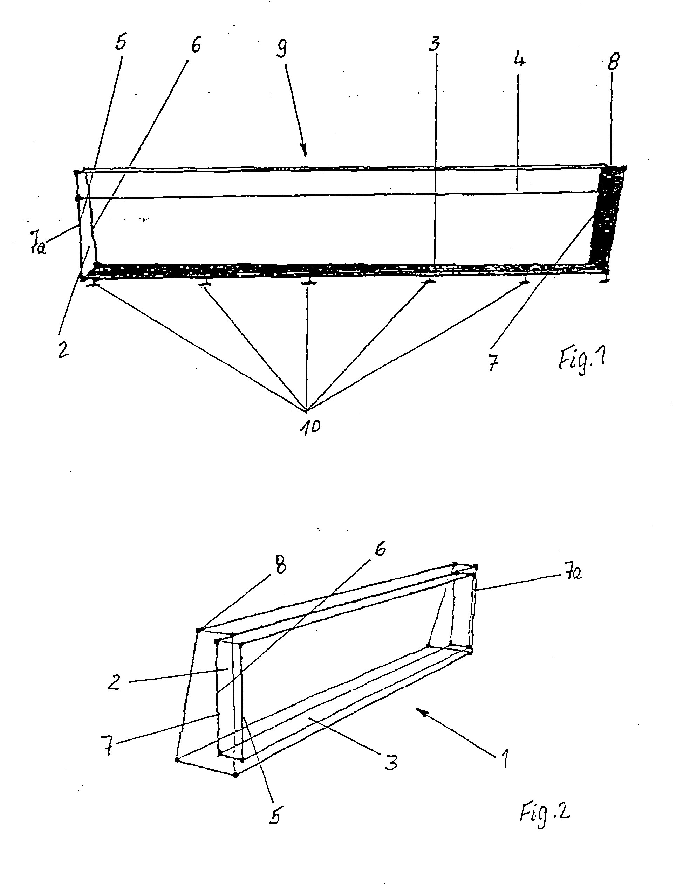

Das in Fig. 1 gezeigte Trägerelement 9 besteht aus einer Rahmenkonstruktion 8 mit Boden 3, die an den umlaufenden Seiten insgesamt oder mindestens an den sichtbaren Seiten mit transparenten Wänden 5, 6, 7, 7a versehen ist, wobei die Rahmenkonstruktion 8 gleichzeitig als ein stabiler Unterbau für einen Sanitärartikel, in diesem Fall für eine Badewanne 11, ausgelegt ist, der aus Kunststoffen, Metall, Holz oder auch druckstabilem Schaumstoff hergestellt sein kann.

Bevorzugt bestehen dabei die transparenten Wände 5; 6; 7; 7a aus einem Acrylglas, die über Klebeverbindungen und/oder wasserdicht abgedichteten Schraubverbindungen mit oder ohne Winkel an der Rahmenkonstruktion 8 befestigt sind. Die Rahmenkonstruktion 8 selbst ist dabei in einer Abmessung ausgelegt, die beim Einsetzen eines Wannenkörpers zwischen den umlaufenden Wänden und dem Boden des Wannenkörpers 13; 13a und den Wänden 5, 6, 7, 7a und dem Boden 3 der Rahmenkonstruktion 8 einen gleichmäßig großenräumigen Zwischenraum 2 ausbilden, der aber auch an der nicht sichtbaren Fläche nach dem Aufstellen der Wannenkörper 13; 13a geringer sein kann.

Als Wannenkörper, 13; 13a wird bevorzugt ein Wannenkörper 13; 13a eingesetzt, der vorteilhafterweise aus einem transparenten Material besteht, so dass der Wannenkörper 13, 13a von den Sichtflächen bis in das Badewanneninnere durchsichtig ist.

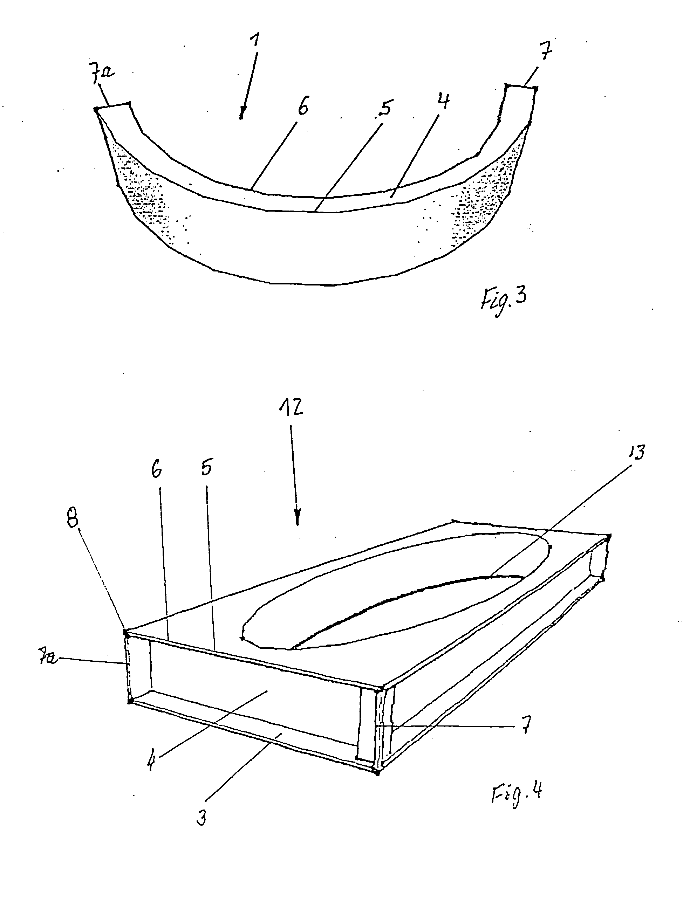

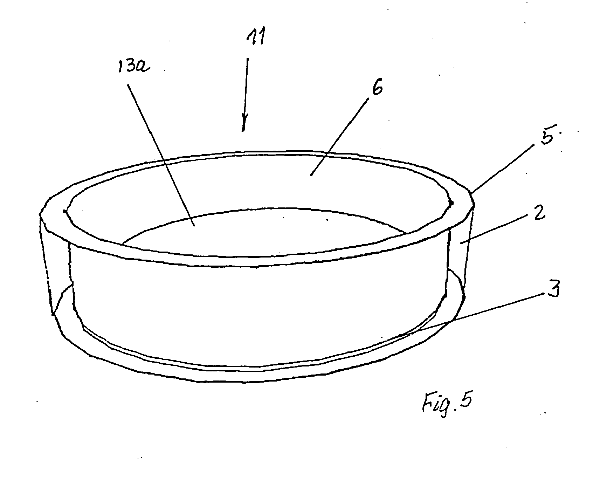

Das beispielsweise in Fig. 1 gezeigte Trägerelement oder die beispielsweise in den Fig. 2, 3 gezeigten Sichtverkleidungen 1, die auch in den Fig. 4 und 5 dargestellt sind, können aber auch rahmenlos durch geeignete Klebverfahren, Schweißverfahren oder auch andere mechanische Verbindungsverfahren oder auch mit einem Tiefziehverfahren oder einer Hohlprägetechnik aus transparentem Material, wie beispielsweise Acrylglas, als ein sich mindestens geschlossenes Trägerelement 9 oder eine in sich mindestens geschlossene Sichtverkleidung 1 hergestellt werden.

Bei großflächigen Sichtverkleidungen 1 aber auch Trägerelementen 9 können die Zwischenräume 2 auch durch nicht weiter gezeigte Distanzelemente abgestützt sein. Dazu werden bevorzugt Distanzelemente empfohlen, die ebenfalls aus transparentem Material hergestellt sind, die beiderseits mit den gegenüberliegenden Wänden 5, 6 stabilisierend verbunden werden.

Werden die Sichtverkleidungen 1 selbst aber auch die Rahmenkonstruktionen 8 mit Sichtverkleidungen 1 als einsetzbare oder untersetzbare Sichtverkleidungen 1 oder Rahmenkonstruktionen 8 mit Sichtverkleidungen 1 ausgebildet, wie in Fig. 1 -3 gezeigt, kann vorteilhafterweise die Sichtverkleidung 1 oder die Rahmenkonstruktion 8 mit höhenverstellbaren Stellfüßen versehen sein, wie in Fig. 1 beispielsweise dargestellt, um auf diese Weise die Sichtverkleidung 1 oder die Rahmenverkleidung 8 an einen aufgestellten Wannenkörper 13; 13a nach dem Untersetzen oder Ansetzen schlüssig in der Höhe unter dem oberen Rand des Wannenkörpers 13; 13a anzupassen.

Die gebildeten Zwischenräume 2 zwischen dem transparenten oder auch undurchsichtigen Wannenkörper 13; 13a und den umlaufenden Wänden 5; 6; 7; 7a und/oder dem Boden 3 und der Sichtverkleidung 1, wird vor dem Ansetzen an den Wannenkörper 13; 13a oder dem Untersetzen unter dem Wannenkörper 13; 13 mit gestalterischen Effekten befüllt. Diese gestalterischen Effekte können nach dem Wunsch des Kunden individuell ein-, zwei- oder dreidimensionale Darstellungen von Landschaften der unterschiedlichsten Art oder Stillleben sein, die u. a. auch aus natürlichen oder künstlichen Materialen, wie Korallen, Amphibolen, präparierten oder künstlichen niedrigen Wirbeltieren und ähnlichen bestehen können.

Die Zwischenräume 2 können aber auch in Form eines Terrariums mit lebenden niedrigen Wirbeltieren und/oder Schnecken gestaltet sein. In diesem Fall ist mindestens eine der Wände 5; 6; 7; 7a zum Zweck der Reinigung lösbar verbunden und der Zwischenraum 2 ist mit einer nicht weiter gezeigten Sauerstoffversorgung und Fütterungsöffnung versehen, die u. a. aus Lüftungsöffnungen bestehen kann, die an der Oberseite der Sichtverkleidungen vorgesehen sind.

Bei einer Ausbildung der Sichtverkleidung 1 mit wasserdichten Zwischenräumen 2 können die Zwischenräume auch mit einer klareren oder gefärbten Flüssigkeit oder Gel befüllt werden, in denen auch gestalterische Effekte mit künstlich oder präparierten oder mineralischen Materialien eingelegt sind.

Der Zwischenraum 2 kann aber auch nur aus Wasser bis zu einem Wasserstand 4, wie beispielsweise in Fig. 1 gezeigt, befüllt und in Form eines Zimmeraquariums mit lebenden Aquarienfischen und Pflanzen befüllt sein. In diesem Fall ist in einer Wand 5; 6; 7; 7a eine nicht weiter gezeigte und möglichst abdeckbare Fütterungsöffnung vorgesehen, über die bevorzugt gleichzeitig die Sauerstoffleitung zur Sauerstoffzuführung durchgeführt wird.
In diesem Fall ist auch bevorzugt eine Wand 5; 6; 7; 7a, die nicht unmittelbar die direkte Sichtfläche bildet, zum Zweck der Reinigung mindestens teilweise lösbar und wasserdicht an der Sichtverkleidung 1 festgelegt und mit einem nicht gezeigten Wasserablauf versehen.

Um die gestalterischen Effekte in den Zwischenräumen 2 optisch wirksamer zu untersetzen, können in den Zwischenräumen 2 in bekannterweise nicht gezeigte Beleuchtungseinrichtungen installiert werden, mit denen die gestalterischen Effekte direkt oder indirekt auch mit unterschiedlichen Leuchtstärken oder Lichtfarben effektvoll zur Geltung gebracht werden können.

Zur Ausbildung von Zwischenräumen 2 in mindestens dreiseitig geschlossenen Sichtverkleidungen werden an sich bekannte Herstellungverfahren, wie Tiefziehen oder die Hohlprägetechniken oder an sich bekannte Verbindungstechniken wie Kleben, Schweißen oder mechanisch bekannte Verbindungstechniken und Abdichtungstechniken eingesetzt und sollen hier nicht weiter erwähnt werden.

Ähnlich wie die Ausbildung der Zwischenräume 2 zwischen den Sichtverblendungen 1 sind auch die Zwischenräume 2 zwischen zwei Wannenkörpern 13; 13a. Hierbei werden beispielsweise transparente Wannenkörper 13, 13a in gleicher Grundform aber mit einer unterschiedlichen Ziehtiefe, Länge und Breite mittels Distanzelementen in einander gefügt und/oder nur an den Rändern der Wannenkörper 13, 13a zueinander verbunden, nach dem die gestalterischen Effekte eingelegt sind. Im Fall, dass der so geschaffene doppelwandige Zwischenraum in Form eines Terrariums oder eines Zimmeraquariums gestaltet werden soll, ist der innere Wannenkörper 13; 13a mit einer Fütterungsöffnung und Reinigungsöffnung ausgebildet und am äußeren Wannenkörper 13; 13a ist eine nicht sichtbare Sauerstoffversorgung vorgesehen, die den äußeren Wannenkörper 13; 13a durchdringt. Soll der Zwischenraum 2 zwischen den zwei Wannenkörpern 13; 13a als Zimmeraquarium ausgestaltet werden, wird zusätzlich am Boden des äußeren Wannenkörpers 13; 13a ein Wasserablauf vorgesehen.

Die in den Fig. 1 bis 5 gezeigten Ausbildungen, die an Hand eines Wannenkörpers 13; 13a näher beschrieben wurden, sind analog auch für andere Grundformen von Sanitärgegenstände übertragbar und sind nur an die gestalterische Form der entsprechenden Sanitärgegenstände, wie beispielsweise bei Duschwannen, Waschtische, Whirpools, Wannenträger etc. anzupassen.

### Aufstellung der Bezugszeichen

- 1: Sichtverkleidung
- 2: Zwischenraum
- 3: Boden
- 4: Wasserstand im Zwischenraum
- 5: Wand
- 6: Wand
- 7: Wand
- 7a: Wand
- 8: Rahmenkonstruktion
- 9: Trägerelement
- 10: Stellfüße
- 11: Badewanne rund
- 12: Badewanne eckig
- 13: Wannenkörper
- 13a: Wannenkörper

## Patentansprüche

1. Sanitärgegenstände mit oder ohne Sichtverkleidungen, insbesondere Badewannen, Duschwannen, Whirpools, Waschtische und Wannenträger, **dadurch gekennzeichnet, dass** die Sanitärgegenstände und/oder Sichtverkleidungen (1) aus mindestens teilweise geschlossenen und beabstandeten Wänden (5, 6, 7, 7a) bestehen, wobei mindestens die Wände (5; 6; 7; 7a), welche die Sichtflächen bilden, transparent sind und dass der von den Wänden (5, 6, 7, 7a) umgrenzte Zwischenraum (2) mit gestalterischen Effekten und/oder Animationen ausgestaltet ist.

2. Sanitärgegenstände nach Anspruch 1, **dadurch gekennzeichnet, dass** die gestalterischen Effekte aus dreidimensionalen Elementen bestehen.

3. Sanitärgegenstände nach Anspruch 2, **dadurch gekennzeichnet, dass** die dreidimensionalen Elemente aus mineralischen und/oder künstlich hergestellten Materialien und/oder Amphibolen und/oder Korallen bestehen.

4. Sanitärgegenstände nach Anspruch 2, **dadurch gekennzeichnet, dass** die gestalterischen Effekte aus ein- und/oder zwei- und/oder dreidimensionalen graphischen Darstellungen bestehen.

5. Sanitärgegenstände nach einem der Ansprüche 1 bis 4, **dadurch gekennzeichnet, dass** der Zwischenraum (2) terrariumähnlich mit lebenden und/oder präparierten und/oder künstlich hergestellten niedrigen Wirbeltieren und/oder Schnecken gestaltet ist.

6. Sanitärgegenstände nach Anspruch 1, **dadurch gekennzeichnet, dass** die Animationen aus Logo's und/oder Namen und/oder Schriftzügen bestehen.

7. Sanitärgegenstände nach einem der Ansprüche 1 bis 6, **dadurch gekennzeichnet, dass** der Zwischenraum (2) mindestens bodenseitig und stirnseitig wasserdicht ausgeführt und mit Flüssigkeit oder einem Gel befüllt ist.

8. Sanitärgegenstände nach Anspruch 7, **dadurch gekennzeichnet, dass** die Flüssigkeit Wasser ist und der Zwischenraum (2) in Form eines Zimmeraquariums ohne oder mit lebenden Aquarienfischen und/oder Wasserpflanzen gestaltet ist.

9. Sanitärgegenstände nach Anspruch 5 und 8, **dadurch gekennzeichnet, dass** der Zwischenraum (2) ein wasserdicht geschlossener Zwischenraum (2) mit mindestens einer lösbaren Wand (5; 6; 7; 7a) ist und im Zwischenraum (2) eine Sauerstoffversorgung vorgesehen ist, deren Versorgungsleitung eine Wand (5; 6; 7: 7a) flüssigkeitsdicht durchdringt.

10. Sanitärgegenstände nach einem der Ansprüche 1 bis 9, **dadurch gekennzeichnet, dass** die Bildung des Zwischenraums (2) der Sanitärkörper selbst doppelwandig ausgebildet ist, wobei der innenseitig und der außenseitig oder nur der innenseitige oder nur der außenseitige Teil des doppelwandigen Sanitärkörpers mindestens teilweise aus einem transparenten Material besteht.

11. Sanitärgegenstände nach einem der Ansprüche 1 bis 9, **dadurch gekennzeichnet, dass** der Zwischenraum (2) mit mindestens einer transparenten Sichtfläche mindestens in einem Abschnitt einer schürzenartig ausgebildeten Sichtverkleidung (1) des Sanitärgegenstands vorgesehen ist.

12. Sanitärgegenstände nach einem der Ansprüche 1 bis 9, **dadurch gekennzeichnet, dass** der Zwischenraum (2) mit mindestens einer transparenten Sichtfläche in einem Trägerelement (9) ausgebildet ist, das als Unterbau des Sanitärgegenstands dient.

13. Sanitärgegenstände nach einem der Ansprüche 1 bis 9, **dadurch gekennzeichnet, dass** der Zwischenraum (2) mit mindestens einer transparenten Sichtfläche gleich der Zwischenraum (2) ist, der von einer versteiften Rahmenkonstruktion (8) mit oder ohne geschlossenen Boden (3) umschlossen wird und die gleichzeitig als Unterbau für den Sanitärgegenstand dient.

14. Sanitärgegenstände nach einem der Ansprüche 11 bis 13, **dadurch gekennzeichnet, dass** der Boden (3) und die Wände (5, 6, 7, 7a) oder nur der Boden (3) oder nur mindestens eine Wand (5; 6; 7; 7a) des Sanitärgegenstands transparent ist.

15. Sanitärgegenstände nach einem der Ansprüche 1 bis 14, **dadurch gekennzeichnet, dass** der Zwischenraum (2) mit einem Rahmen aus Kunststoff oder Schaumstoff oder Metall oder Holz oder einem Verbund einzelner Materialien davon gebildet wird, wobei die Materialien untereinander mit oder ohne Distanzelemente durch Verkleben oder Verschrauben oder Verschweißen verbunden sind.

16. Sanitärgegenstände nach einem der Ansprüche 1 bis 15, **dadurch gekennzeichnet, dass** die transparenten Wände (5, 6, 7, 7a) aus Glas oder transparentem Kunststoff bestehen.

17. Sanitärgegenstände nach einem der Ansprüche 1 bis 17, **dadurch gekennzeichnet, dass** im Zwischenraum (2) eine direkte oder indirekte Beleuchtung integriert ist.
